# EUROPÄISCHE PATENTSCHRIFT

(11) **EP 1 202 893 B1**
(45) Veröffentlichungstag und Bekanntmachung des Hinweises auf die Patenterteilung: **17.12.2003**
(21) Anmeldenummer: 00909244.6
(22) Anmeldetag: 23.02.2000
(51) Int. Cl.: B61B 12/06, G01B 7/30

(54) **VORRICHTUNG ZUR ÜBERWACHUNG VON RELATIVBEWEGUNGEN WENIGSTENS ZWEIER BAUTEILE ZUEINANDER**
DEVICE FOR MONITORING RELATIVE MOVEMENTS OF TWO COMPONENTS IN RELATION TO EACH OTHER
DISPOSITIF POUR SURVEILLER LES MOUVEMENTS RELATIFS MUTUELS D'AU MOINS DEUX ELEMENTS

(30) Priorität: 23.02.1999 DE 19907718
(43) Veröffentlichungstag der Anmeldung: 08.05.2002
(73) Patentinhaber: Edlhuber, Christian, 82481 Mittenwald (DE)
(72) Erfinder: Edlhuber, Christian, 82481 Mittenwald (DE)
(86) Internationale Anmeldenummer: EP0001493
(87) Internationale Veröffentlichungsnummer: WO00050283

(56) Entgegenhaltungen:
- CH-A- 683 414
- DE-C- 817 762
- FR-A- 2 387 830
- US-A- 4 363 945
- US-A- 4 940 063

## Beschreibung

Die Erfindung betrifft eine Vorrichtung zur Überwachung von Relativbewegungen wenigstens zweier Bauteile zueinander.

Es gibt in der Technik eine Vielzahl von Anwendungsfällen, bei denen wenigstens zwei Bauteile Relativbewegungen zueinander ausführen. Es ist bereits bekannt, diese Relativbewegungen durch eine Meßvorrichtung zu überwachen, siehe z.B. die US-4,940,063 die dem ersten Teil des Anspruchs 1 entspricht. Oftmals finden derartige Relativbewegungen in Form von beispielsweise Schwenkbewegungen nur innerhalb eines gewissen Bereiches statt. Beim Überschreiten der Grenzen eines derartigen Relativbewegungs-Bereiches können unter Umständen gefährliche Situationen, Unfälle oder Beschädigungen auftreten. Ein als rein illustrativ und exemplarisch zu verstehendes Beispiel, bei dem Relativbewegungen wenigstens zweier Bauteile zueinander nur innerhalb eines gewissen Bereiches stattfinden dürfen, sind sogenannte Ein-Seil-Umlaufbahnen (EUBs). Im Betrieb von EUBs besteht die Gefahr, daß das Gehänge sich in der Einlaufrolle der Rollenwiege verfängt, die Rollenwiege vom weiterlaufenden Seil mitgerissen wird, sich aufbäumt und die gesamte Rollenbatterie umschlägt, wodurch das Seil aus der Führung durch die Rollenwiege gerissen wird. Es sind bereits in der Praxis Seilbahn-Unglücke geschehen, bei denen Menschen aufgrund dieses Umschlagens der gesamten Rollenbatterie ihr Leben verloren haben.

Es ist bereits bekannt, Seilentgleisungen bei Bergbahnen durch einen starren Stab, der als elektrischer Leiter ausgebildet ist, zu überwachen, der unter dem Gewicht des entgleisten Seiles bricht. Derartige sogenannte Bruchstäbe haben beispielsweise U-förmigen Querschnitt und sind aus Stahl oder einer spröden Aluminium-Druckgußlegierung mit Einkerbungen als Soll-Bruchstellen ausgebildet. Die freien Enden des Bruchstabes dienen als Anschlußkontakte, wobei die elektrische Leitfähigkeit zwischen diesen beiden Anschlußkontakten durch den Bruchstab hindurch bei einem Brechen des Bruchstabes unterbrochen wird. Der Bruchstab bricht immer dann, wenn eine Grenze der Relativbewegung zwischen zwei Bauteilen erreicht ist, oder - wie bereits erwähnt - unter einer im normalen Betrieb nicht auftretenden Belastung, beispielsweise unter dem Gewicht des entgleisten Seils. Die Stromunterbrechung über den Bruchstab läßt sich dann dazu heranziehen, einen Notstopp etc. auszulösen.

Aufgrund des starren Charakters derartiger Bruchstäbe sind diese aber nur dazu geeignet, die korrekte Einhaltung von starren Relativlagen zwischen Bauteilen zu überwachen - schon kleinere Relativbewegungen können einen Bruchstab zum Brechen bringen. Mit anderen Worten, bereits bei relativ geringen Abweichungen von der starren Relativlage bricht der Bruchstab, obgleich die Abweichung von der starren Relativlage bei weitem noch nicht einen kritischen Wert erreicht hat.

Das System der Bruchstäbe kann somit nur bei ganz bestimmten Anwendungsfällen eingesetzt werden. Immer dann, wenn wenigstens zwei Bauteile Relativbewegungen in einem bestimmten Bereich durchführen, sind derartige Bruchstäbe nicht anwendbar, auch dann nicht, wenn sie anstelle von Stahl oder sprödem Aluminium-Druckguß ein flexibleres Material verwenden würden, da bei immer wiederkehrenden gleichförmigen Relativbewegungen zwischen den Bauteilen, was mit einer entsprechenden Hin- und Herbiegung des Bruchstabes einhergeht, die Gefahr von Ermüdungsbrüchen besteht. Nicht ausschließlich, aber besonders bei Bergbahnen treten derartige Relativbewegungen auch im normalen Betreib auf. Es sind dies beispielsweise Bewegungen zwischen der Rollenwiege und einem Traggestell, an welchem die Rollenwiege schwenkbar gelagert ist und welches tal- oder bergstationseitig oder an einer Stütze gelagert ist. Bei Ein- und Ausfahrvorgängen aus Tal- und Bergstation, beim Überfahren von Stützen, durch Schaukelbewegungen, unterschiedliche Seildurchhängungen, unterschiedliche Zuladungen, Schwingungen etc. sind die Rollenwiegen gegenüber dem Traggestell praktisch ständig in Bewegung bzw. nehmen hierzu unterschiedlich weit oder stark verschwenkte Lagen ein. Dies gilt bei EUBs genauso wie bei Kabinenbahnen, Pendelbahnen, Zwei-Seil-Umlaufbahnen etc.

Die vorliegende Erfindung hat es sich demgegenüber zur Aufgabe gemacht, eine Vorrichtung zur Überwachung von Relativbewegungen wenigstens zweier Bauteile zueinander zu schaffen, bei der nicht nur die Einhaltung einer starren Relativlage möglich ist, sondern die Überwachung der Einhaltung von Relativlagen von auch in mehreren Freiheitsgraden beweglichen Bauteilen innerhalb frei wählbarer Grenzlagen gewährleistet ist.

Zur Lösung dieser Aufgabe schlägt gemäß Anspruch 1 die vorliegende Erfindung eine Vorrichtung zur Überwachung von Relativbewegungen wenigstens zweier Bauteile zueinander vor, mit einem zwischen den Bauteilen angeordneten, an diesen insbesondere endseitig befestigten und die Relativbewegungen unter Verformung mitmachenden, langgestreckten Sensorkörper, der bei Überschreiten einer Verformungsgrenze ein Signal ausgibt, wobei der langgestreckte Sensorkörper aus einer Mehrzahl von im wesentlichen koaxial hintereinander angeordneten Segmenten aufgebaut ist, wobei die beiden Stirnflächen jeweils einander benachbarter Segmente im Abstand zueinander angeordnet sind und wobei ein signalauslösendes Element entlang der einzelnen Segmente verläuft und diese miteinander verbindet.

Durch den Gegenstand der vorliegenden Erfindung ist es möglich, aufgrund des segmentartigen Aufbaus des langgestreckten Sensorkörpers diesem im wesentlichen kraftfrei innerhalb gewisser Grenzen verformen zu können, d.h., der Sensorkörper macht die Relativbewegung der wenigstens zwei Bauteile mit, ohne diese Relativbewegung irgendwie zu behindern. Bei Erreichen oder Überschreiten einer Verformungsgrenze wird von dem signalauslösenden Segment ein entsprechendes Signal ausgegeben. Somit ist es durch den Gegenstand der vorliegenden Erfindung möglich, nicht nur die Ein- oder Beibehaltung einer starren Relativlage zu überwachen, sondern - gegebenenfalls in mehreren Ebenen oder Freiheitsgraden - zwischen wenigstens zwei Bauteilen stattfindende Relativbewegungen.

Unter "Bauteil" oder "Bauteile" sei oder seien im Sinne der vorliegenden Erfindung Körper oder Gegenstände an sich, d.h. sich relativ zueinander bewegende oder relativ zueinander bewegliche Massen verstanden.

Vorteilhafte Weiterbildungen der Erfindung sind in den Unteransprüchen angegeben.

Verläuft das signalauslösende Element im wesentlichen mittig axial durch die einzelnen Segmente, befindet es sich, solange der Sensorkörper seine Verformungsgrenze noch nicht erreicht hat, in der neutralen Faser des Sensorkörpers und damit in dem belastungsärmsten Bereich.

Die Abstände der Stirnflächen jeweils einander benachbarter Segmente sind bevorzugt über die gesamte Länge des Sensorkörpers hinweg gesehen gleich. Hierdurch ist eine gleichförmige Verformung des Sensorkörpers gewährleistet.

Sind im Gegensatz hierzu die Abstände der Stirnflächen jeweils einander benachbarte Segmente so gewählt, daß sie sich über die gesamte Länge des Sensorkörpers hinweg gesehen ändern, wobei diese Abstandsänderung der Stirnflächen darüber hinaus stetig (zu- oder abnehmend) erfolgen kann, kann ein progressives oder degressives Ansprechverhalten des Sensorkörpers eingestellt werden.

Die Abstände der Stirnflächen jeweils einander benachbarter Segmente sind bevorzugt werkseitig oder herstellerseitig fest eingestellt. Hierdurch ist es möglich, Abstandsänderungen der einzelnen Segmente während des Betriebs zu vermeiden und darüber hinaus ist der Hersteller in der Lage, Sensorkörper anzubieten, welche ein definiertes Ansprechverhalten haben.

Das signalauslösende Element ist bevorzugt ein elektrischer Leiter, der bei Überschreiten der Verformungsgrenze bricht oder reißt. Im normalen Betrieb, d.h. bei Bewegungen des Sensorkörpers innerhalb der Verformungsgrenzen liegt aufgrund der bevorzugten im wesentlichen mittigen Anordnung des signalauslösenden Elementes bzw. elektrischen Leiters dieses bzw. dieser im wesentlichen in der neutralen Faser des Sensorkörpers. Bei Überschreiten der Verformungsgrenze wird das signalauslösende Element bzw. der Leiter auf Zug beansprucht derart, daß er bricht oder reißt. Diese Unterbrechung des signalauslösenden Elementes bzw. elektrischen Leiters kann dann zu einer entsprechenden Signalerzeugung herangezogen werden.

In einer anderen Ausführungsform kann das signalauslösende Elemente ein Dehnungsmeßelement sein, welches bei Erreichen der Verformungsgrenze nicht mehr in der neutralen Faser liegt, sondern auf Dehnung beansprucht wird und ebenfalls ein entsprechendes Signal ausgeben kann.

Da gemäß einer Ausführungsform das signalauslösende Element ein elektrischer Leiter sein kann, sind bevorzugt die Segmente elektrisch isolierend, um nach außen hin anliegende Spannungen, Kurzschlüsse etc. zu vermeiden.

Weiterhin sind die Segmente jeweils mit einem Schutzüberzug versehen, um Witterungsschutz, Schutz vor aggressiven Medien in der Umgebung etc. zu gewährleisten.

Genauso gut können die Segmente in einem sich über die gesamte Länge des Sensorkörpers erstreckenden, durchgehenden Schutzüberzug angeordnet sein. Dieser durchgehende Schutzüberzug kann z.B. in Form eines dünnen flexiblen Schlauchs vorliegen und bietet den Vorteil, daß neben den einzelnen Sensorkörpern auch das signalauslösende Element, welches zwischen den einzelnen Segmenten frei liegt, geschützt ist.

Das Material des Schutzüberzugs ist hierbei bevorzugt so gewählt, daß die Bewegungen oder Verformungen des Sensorkörpers im wesentlichen nicht behindert werden.

Weitere Einzelheiten, Aspekte und Vorteile der vorliegenden Erfindung ergeben sich aus der nachfolgenden Beschreibung einer als exemplarisch und illustrativ zu verstehenden Ausführungsform unter Bezugnahme auf die Zeichnung.

Es zeigt:
Fig. 1 eine Seitenansicht auf eine Rollenwiege einer Ein-Seil-Umlaufbahn (EUB), bei der die vorliegende Erfindung zur Anwendung gelangt;
Fig. 2 eine schematisch vereinfachte, seitliche Teilansicht auf einen langgestreckten Sensorkörper im unverformten Zustand;
Fig. 3 eine Fig. 2 entsprechende Darstellung auf den Sensorkörper im verformten Zustand; und
Fig. 4 eine Seitenansicht auf eine Rollenwiegenanordnung an einer Stütze einer Ein-Seil-Umlaufbahn (EUB), bei der der eingangs erläuterte Gefahrenzustand einer umschlagenden Rollenbatterie eingetreten ist.

Die Beschreibung der vorliegenden Erfindung erfolgt nachfolgend unter Bezugnahme auf ihre Anwendung bei einer Ein-Seil-Umlaufbahn oder EUB; es versteht sich, daß der Gegenstand der vorliegenden Erfindung nicht auf diese Anwendung beschränkt ist, sondern daß sie generell dort einsetzbar ist, wo wenigstens zwei Bauteile Relativbewegungen zueinander ausführen. Beispiele hierzu sind unter anderem Fertigungsmaschinen wie Handhabungs-, Schweißoder Lackierroboter, automatische oder teilautomatische Dreh- oder Fräsmaschinen, Geräte, Anlagen oder Maschinen in der Hebe- oder Fördertechnik, Verpackungsmaschinen, landwirtschaftliche Maschinen, Baufahrzeuge etc.

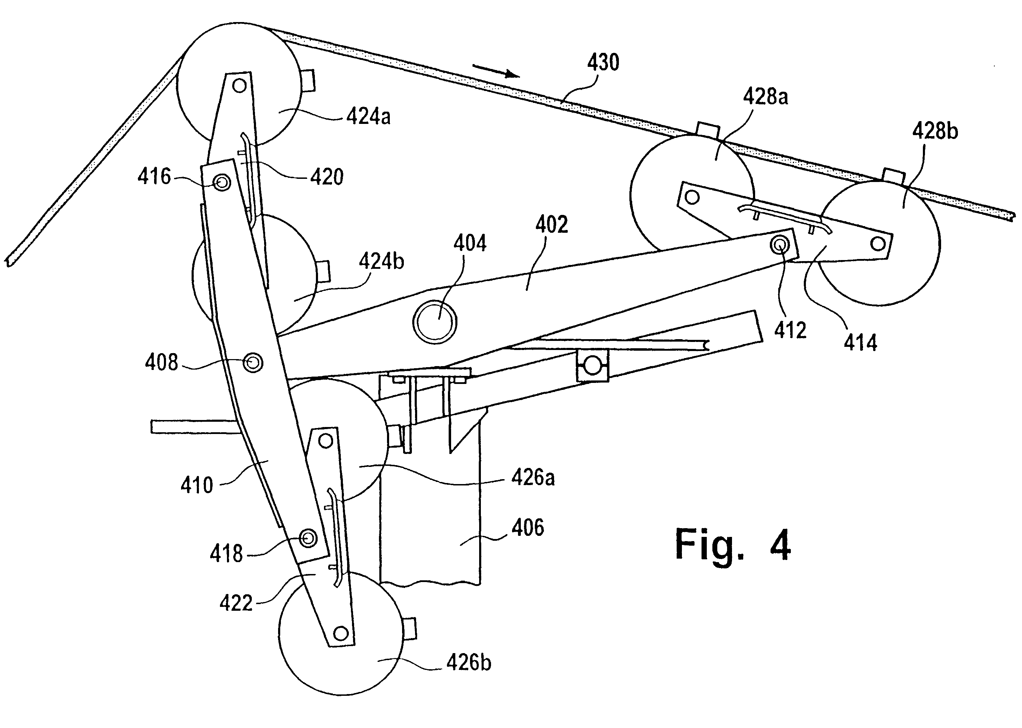

Das Eingangs geschilderte Problem des Umschlagens einer Rollenwiege oder Rollenbatterie bei einer EUB ist in Fig. 4 nochmals näher erläutert. An einem Tragarm oder Traggestell 402, welches über ein Schwenklager 404 schwenkbeweglich an einem ortsfesten Widerlager, beispielsweise einer Stütze 406 der EUB gelagert ist, ist einenends in einem Schwenklager 408 ein Unter-Traggestell 410 und anderenends in einem Schwenklager 412 eine erste Rollenwiege 414 gelagert. Das Unter-Traggestell 410 trägt in zwei weiteren Schwenklagern 416 und 418 zweite und dritte Rollenwiegen 420 und 422. An der Rollenwiege 420 sind zwei Rollen 424a und 424b gelagert, an der Rollenwiege 422 zwei Rollen 426a und 426b und an der Rollenwiege 414 zwei Rollen 428a und 428b. Im Normalbetrieb läuft ein Seil 430 über die Rollen 424a bis 428b und wird von diesen abgestützt. Läuft hierbei das Seil in der in Fig. 4 mit dem Pfeil gezeigten Richtung (von links nach rechts), stellt die Rolle 424a die Einlaufrolle der in Fig. 4 gezeigten Rollenwiegenanordnung dar.

Bei EUBs hängen die einzelnen Gondeln oder Kabinen der Bahn mittels sogenannter Gehänge an dem Seil 430. Verfängt sich nun das Gehänge an der Einlaufrolle 424a, wobei das Seil 430 nach wie vor in Pfeilrichtung läuft, wird diese Rolle 424a von dem weiterlaufenden Seil 430 hochgerissen, wobei dann das Unter-Traggestell 410 um das Lager 408 in Uhrzeigerrichtung dreht und die gesamte an dem Unter-Traggestell 410 angeordnete Rollenbatterie in der aus Fig. 4 ersichtlichen Weise umschlägt, so daß das Seil 430 aus der Führung zumindest im Bereich der Stütze 406 gerissen werden kann.

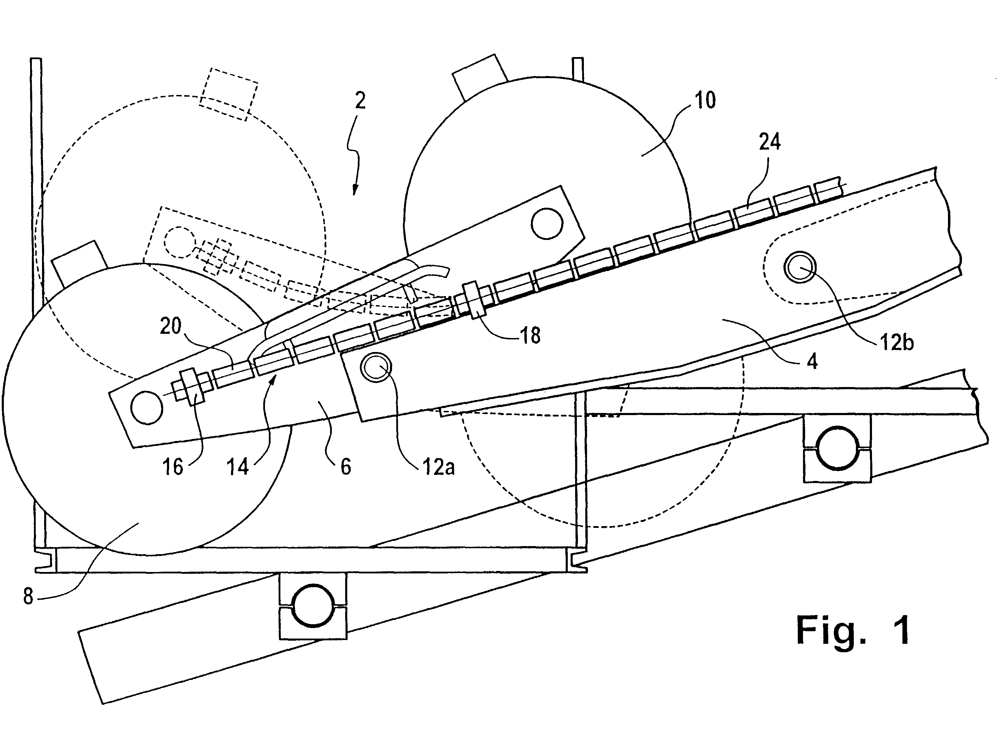

Fig. 1 zeigt eine Seitenansicht auf einen Teil einer Aufhängevorrichtung für eine EUB, bei welcher eine insgesamt mit 2 bezeichnete erfindungsgemäße Vorrichtung zur Anwendung gelangen kann. Dargestellt ist ein Traggestell 4, welches über in Fig. 1 nicht näher dargestellte Mittel (Schwenklager) an einem ortsfesten Widerlager oder Gegenstück (Stütze, Tal- oder Bergstation) angeordnet ist. Das Traggestell 4 ist langgestreckt und weist an seinen beiden freien Enden jeweils eine Rollenwiege 6 auf, wobei in Fig. 1 nur die linke Rollenwiege 6 dargestellt ist.

Die Rollenwiege 6 trägt drehbar gelagerte Laufrollen 8 und 10, über welche ein in Fig. 1 nicht gezeigtes Seil läuft.

Z.B. beim Überfahren einer Stütze oder beim Einfahren in die Berg- oder Talstation besteht die Gefahr, daß das Gehänge, mit welchem eine Kabine, Gondel oder ein Sessel an dem Seil aufgehängt ist, an der Rolle 8 (wenn diese in Fahrtrichtung gesehen die Einlaufrolle ist) verfängt und die Rollenwiege 6 vom weiterlaufenden Trag- und Förderseil mitgerissen wird, sich aufbäumt und die gesamte Rollenwiege umschlägt. Diese Umschlagbewegung erfolgt hierbei um einen Lagerzapfen 12a, mit welchem die Rollenwiege 6 an dem Traggestell 4 schwenkbar gelagert ist und/oder einem Lagerzapfen 12b, mit welchem das Traggestell 4 z.B. an der Stütze gelagert ist (vergl. auch Fig. 4). In Fig. 1 ist eine derartige Bewegung der Rollenwiege 6 gestrichelt dargestellt; in der gestrichelten Stellung hat sich die Rollenwiege 6 gegenüber dem Traggestell 4 in Uhrzeigerrichtung verschwenkt.

Zwischen der Rollenwiege 6 und dem Traggestell 4, welche somit eine Relativbewegung zueinander durch Verschwenken der Rollenwiege 6 um den Lagerzapfen 12a ausführen können, ist ein langgestreckter Sensorkörper 14 der erfindungsgemäßen Vorrichtung 2 angeordnet. Der Sensorkörper 14 ist mit zwei Laschen 16 bzw. 18 seitens der Rollenwiege 6 bzw. seitens des Traggestells 4 festgelegt und macht von daher Bewegungen der Rollenwiege 6 gegenüber dem Traggestell 4 mit.

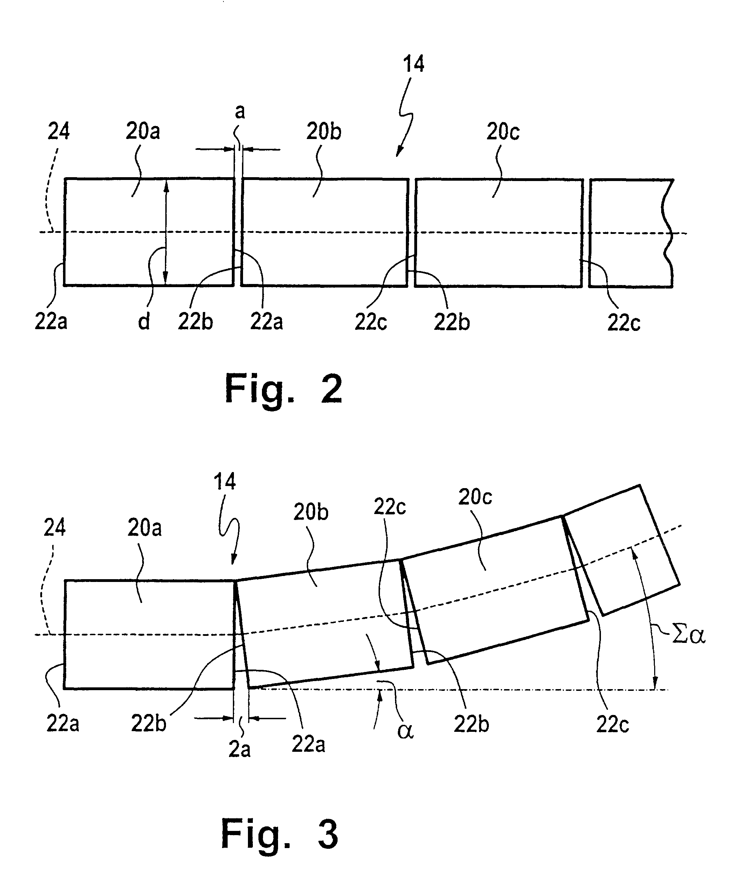

Wie am besten aus den Figuren 2 und 3 hervorgeht, ist der Sensorkörper 14 kein ununterbrochen durchgehender Körper oder Gegenstand, sondern er ist aus einer Mehrzahl von einzelnen Segmenten 20a, 20b, 20c,... aufgebaut. Die einzelnen Segmente 20a, 20b, 20c,... liegen hierbei mit ihren Stirnflächen 22a, 22b, 22c,... nicht aneinander, sondern diese Stirnflächen sind gemäß Fig. 2 in einem Abstand a voneinander beabstanded. Der Abstand a kann über die gesamte Länge des Sensorkörpers 14 hinweg gleich sein, oder aber der Abstand a ändert sich über die gesamte Länge des Sensorkörpers 14 hinweg gesehen, wobei diese Änderung bevorzugt stetig, das heißt progressiv oder degressiv ist.

Die Verbindung der einzelnen Segmente 20a, 20b, 20c,... untereinander erfolgt bevorzugt über ein im wesentlichen mittig in den einzelnen Segmenten angeordnetes, sich durchgehend von einem Ende des Sensorkörpers 14 zum anderen Ende erstreckendes signalauslösendes Element 24, welches in den Figuren 2 und 3 gestrichelt dargestellt ist. Dieses signalauslösende Element 24 kann beispielsweise ein elektrischer Leiter oder auch ein Dehnungsmeßstreifen sein. An den beiden Enden des Sensorkörpers 14 kann ein entsprechender Anschluß vorhanden sein, um einen Abgriff von dem signalauslösenden Element 24 zu haben.

Aufgrund der im wesentlichen mittigen Anordnung des signalauslösenden Elementes 24 in den einzelnen Segmenten 20a, 20b, 20c,..., das heißt aufgrund des Verlaufs des signalauslösenden Elementes 24 im wesentlichen entlang der Längsmittelachse des Sensorkörpers 14, liegt dieses Element 24 bei Verformungen des Sensorkörpers 14 in der neutralen Faser und wird somit weder auf Druck noch auf Zug belastet. Weiterhin erlaubt die mittige Anordnung des signalauslösenden Elements 24 zusammen mit der bevorzugt zylindrischen Ausbildung der Segmente 20a, 20b, 20c,... eine allseitige Auslenkung des Sensorkörpers 14.

Anstelle der mittigen Anordnung des signalauslösenden Elementes 24 kann dieses aber auch am Außenumfang des Sensorkörpers 14 dort verlegt werden, wo bei einer Verformung des Sensorkörpers 14 die Zugseite liegt. Dies bedingt allerdings einige konstruktive Änderungen, z.B. die Überbrückung jedes Abstandes a durch das Element 24 muß mit einem gewissen Längenüberschuß des Elements 24 unter Bildung einer Schlaufe oder eines Durchhangs etc. erfolgen, um eine Verformung, d.h. Biegung des Sensorkörpers zu ermöglichen. Auch ist dann der Sensorkörper nicht mehr einbau- oder lageunabhängig.

Der Abstand a zwischen den einzelnen Stirnflächen 22a, 22b, 22c,... wird bevorzugt werks- oder herstellerseitig fest und bleibend eingestellt. Abhängig von diesem Abstand a und abhängig von einem Durchmesser d der einzelnen Segmente können sich die Segmente relativ zueinander abwinkeln, wobei die Abwinkelung frei im Raum erfolgen kann, das heißt, es lassen sich einerseits Relativbewegungen in allen möglichen Freiheitsgraden mit der erfindungsgemäßen Vorrichtung 2 überwachen und andererseits bestehen keine Beschränkungen hinsichtlich des An- oder Einbaus bzw. es müssen keine besonderen Regeln beim Einbau beachtet werden. Abhängig davon, wie groß der Bewegungsspielraum des Sensorkörpers 14 sein darf, bis die Verformungsgrenze gemäß Fig. 3 erreicht ist, wird der Abstand a gewählt:

Gemäß Fig. 3 können zwei einander benachbarte Segmente, beispielsweise die Segmente 20a und 20b zueinander abgewinkelt werden, wobei die beiden Segmente 20a und 20b zueinander einen Winkel α einnehmen und sich der Spalt a zwischen den Stirnflächen 22a und 22b in Fig. 3 oben schließt, dafür in Fig. 3 unten um den Betrag 2a aufklafft. Bei einer Mehrzahl von hintereinander angeordneten Segmenten ergibt sich eine maximale Verformung oder Auslenkung zwischen dem ersten und dem letzten Segment aus der Summe der einzelnen Abwinkelungen α, wie in Fig. 3 durch das Symbol Σα veranschaulicht. Die einzelnen Segmente 20a, 20b, 20c,... stoßen bei Erreichen der Verformungsgrenze in Fig. 3 oben, das heißt auf der Stauchoder Druckseite des Sensorkörpers 14 aneinander, wobei die Spalte a zwischen den Segmenten geschlossen werden und in Fig. 3 unten, das heißt auf der Zugseite klaffen die einzelnen Spalte um den doppelten Betrag 2a. Dieser in Fig. 3 dargestellte Zustand stellt die Verformungsgrenze des Sensorkörpers 14 dar, in dem sich das signalauslösende Element 24 nicht mehr in der neutralen Faser befindet, sondern auf Zug belastet wird. Beim Überschreiten dieser Verformungsgrenze wird das signalauslösende Element 24, welches beispielsweise ein elektrischer Leiter ist, abgebrochen oder zerissen, so daß ein Stromoder Signalfluß durch das Element 24 nicht mehr gegeben ist, was von einer entsprechenden Auswerteelektronik erfaßt werden kann. In einer anderen Ausführungsform ist das signalauslösende Element 24 beispielsweise ein Dehnungsmeßstreifen, der ab der Stellung gemäß Fig. 3 auf Zug belastet wird und ein entsprechendes Signal ausgeben kann.

Wie aus Fig. 1 ersichtlich ist, macht der Sensorkörper 14 somit eine Relativbewegung, d.h. Verschwenkung der Rollenwiege 6 gegenüber dem Traggestell 4 bis zu der Verformungsgrenze gemäß Fig. 3 kraft- und widerstandsfrei mit. Wird die Verformungsgrenze überschritten, wird das signalauslösende Element 24 zum Ansprechen gebracht, was entsprechende Maßnahmen einleiten kann. Beispielsweise wird die Verformungsgrenze in Fig. 1 dann überschritten, wenn die Rollenwiege 6 droht, gegenüber dem Traggestell 4 umzuschlagen. Ein von dem signalauslösenden Element 24 kommendes entsprechendes Signal kann dann beispielsweise dazu verwendet werden, eine Nothaltvorrichtung der gesamten EUB auszulösen.

Man erkennt in Fig. 1, daß ein langgestreckter Sensorkörper 14 ausreichend ist, beide Rollenwiegen 6 zu überwachen, da ausgehend von der in Fig. 1 rechten Lasche 18 der Sensorkörper 14 weiter in Richtung der in Fig. 1 rechts liegenden Rollenwiege entlang des Traggestells 4 geführt wird und dort analog zu der dargestellten linken Rollenwiege 6 befestigt ist. Selbstverständlich kann aber auch für jede Rollenwiege ein eigener Sensorkörper 14 vorgesehen werden.

Wie bereits weiter oben erwähnt, ändert sich die Verformungsgrenze abhängig von der Größe a des Spaltes zwischen den einander benachbarten Stirnflächen der einzelnen Segmente. Die mathematische Gesetzmäßigkeit läßt sich hierbei ausdrücken als a = (tanα d)/2. Bei einem Durchmesser d der einzelnen Segmente von 20 mm und bei einem Winkel α von 1° ergibt sich ein Abstand a von 0,17 mm. Werden andere Ablenkwinkel α gefordert und/oder haben die Segmente andere Durchmesser d, ergeben sich entsprechend andere Werte für den Abstand a. Das Ansprechverhalten des Sensorkörpers 14 kann somit durch entsprechende Wahl des Abstandes a, des Durchmessers d und der Anzahl der Segmente 20a, 20b, 20c,... exakt vorherbestimmt werden.

Im Gegensatz zu bisher üblichen Bruchstäben, welche die Einhaltung einer starren Relativlage zwischen zwei Bauteilen überwachen konnten, ist es mit dem Gegenstand der vorliegenden Erfindung möglich, relativ zueinander bewegliche Bauteile daraufhin zu überwachen, daß sie ihre Endlagen der Relativbewegung nicht überschreiten.

Die einzelnen Segmente 20a, 20b, 20c,... sind bevorzugt aus Kunststoff, wobei dann bei deren Herstellung das signalauslösende Element 24 gleichzeitig miteingebettet, d.h. beispielsweise eingegossen werden kann. Abhängig von dem für die Segmente verwendeten Material kann es sich als vorteilhaft erweisen, die einzelnen Segmente noch mit einem Schutzüberzug zu versehen, der Schutz vor Witterungseinflüssen, aggressiven Medien in der Umgebung der Vorrichtung 2 und Schutz vor mechanischen Belastungen bietet. Anstelle einer einzelnen Ummantelung der einzelnen Segmente kann auch ein sich über die gesamte Länge des Sensorkörpers 14 erstreckender durchgehender Schutzüberzug vorgesehen werden, beispielsweise ein Kunststoffschlauch entsprechender Flexibilität. Dies bietet noch den zusätzlichen Vorteil, daß der in den Spalten a frei, d.h. ungeschützt vorliegende Signaldraht, Dehnungsmeßstreifen oder dergleichen geschützt ist.

Wie bereits erläutert, bietet die zylindrische Form der einzelnen Segmente 20a, 20b, 20c,... mit kreisrundem Querschnitt den Vorteil, daß der Sensorkörper in Bezug auf seine durch das signalauslösende Element 24 gebildete Längsmittelachse allseitig gleich gut oder leicht ausgelenkt werden kann. Ist diese Eigenschaft nicht notwendig oder nicht gewünscht, können die einzelnen Segmente 20a, 20b, 20c,... auch andere Querschnittsformen haben, z.B elliptisch, drei-, vier- oder mehreckig.

Wie aus der zeichnerischen Darstellung der Fig. 1 und 4 hervorgeht, kann auch eine Mehrzahl von erfindungsgemäßen Vorrichtungen oder Sensorkörpern 14 in Kombination zum Einsatz gelangen, wobei beispielsweise und unter Bezugnahme auf Fig. 4 eine derartige Vorrichtung Bewegungen der Rollenwiege 420 gegenüber dem Unter-Traggestell 410 überwacht, eine weitere Vorrichtung entsprechend für die Rollenwiege 422 und das Unter-Traggestell 410 vorhanden ist, eine Vorrichtung für die Rollenwiege 414 und das Traggestell 402, eine Vorrichtung für das Unter-Traggestell 410 und das Traggestell 402 und schließlich noch eine Vorrichtung zwischen dem Traggestell 402 und der Stütze 406 vorgesehen ist. Dies deshalb, als sämtliche Rollenwiegen, Traggestelle und Unter-Traggestelle gegeneinander und gegenüber der Stütze 406 unterschiedliche Bewegungen mit unterschiedlichen Grenzlagen abhängig von den jeweiligen Betriebszuständen der Bahn durchführen. Es läßt sich somit für jede einzelne Rollenwiege ein Grenzwert der zulässigen Auslenkung definieren und durch den Gegenstand der Erfindung auch einstellen, nämlich durch unterschiedliche Abstände a zwischen den einzelnen Segmenten 20a, 20b, 20c,..., entsprechende Wahl und Anordnung der Befestigungspunkte der Vorrichtung 14 beispielsweise mit den Laschen 16 und 18, wodurch im Auslenkungsbereich aktive Segmente der einzelnen Vorrichtungen 14 gezielt ausgewählt werden können, sowie durch unterschiedliche Längen der einzelnen Segmente 20a, 20b, 20c,... und/oder unterschiedliche Geometrien hiervon. Wie bereits weiter oben erwähnt, kann auch für mehrere zueinander bewegliche Elemente oder Bauteile, z.B. die beiden Rollenwiegen 420 und 422 an dem Unter-Traggestell 410 ein gemeinsamer Sensorkörper 14 vorhanden sein.

Anstelle eines durchgehenden signalauslösenden Elementes 24 können auch in den Zwischenräumen zwischen den einzelnen Segmenten 20a, 20b, 20c,... im Bereich der dortigen Stirnflächen 22a, 22b, 22c,... eine Anzahl von Drucksensoren angeordnet sein, welche Druckanlage der einzelnen Segmentstirnflächen (vergl. Fig. 3) melden.

Die einzelnen Segmente 20a, 20b, 20c,... können auch über die Länge der gesamten Vorrichtung 14 hinweg gesehen aus unterschiedlichem Materialien, beispielsweise Materialien unterschiedlicher Härte sein, so daß sich harte Segmente mit weicheren abwechseln. Bei Verwendung von Dehnungsmeßstreifen als signalauslösende Elemente 24 ist die Signalerzeugung nicht digital, d.h. "1" entsprechend einem unversehrten Leiter und "0" entsprechend einem gebrochenen oder gerissenen Leiter (oder umgekehrt), sondern der Signalausgang kann proportional zur Verformung des Sensorkörpers 14 gemacht werden.

Eine entsprechende Dimensionierung vorausgesetzt, kann der Sensorkörper 14 auch die Funktion einer an sich bekannten Reißleine übernehmen.

Wie bereits angedeutet, ist der Gegenstand der vorliegenden Erfindung nicht auf EUBs oder Seilbahnen allgemein beschränkt; vielmehr ist eine Vielzahl von Anwendungsfällen denkbar, wo zwei oder auch mehr relativ zueinander bewegliche oder sich bewegende (bzw. an sich relativ starr zueinander liegende, im Extrem- oder Störfall aber realtivbewegliche) Bauteile, Körper oder Massen zu überwachen sind. Beispiele hierzu seien Werkzeugmaschinen, Fertigungs-, Lackier- oder Schweißroboter, Fertigungsanlagen allgemein (Verpackung, Abfüllung, Verarbeitung etc.). Weiterhin kann der Gegenstand der vorliegenden Erfindung auch als Bewegungssensor eingesetzt werden, z.B. zur Überwachung von rutsch-, eis- oder felssturzgefährdeten Hängen, Gletschern oder Felswänden. Die Anbringung des Sensorkörpers (der hierbei praktisch beliebige Länge haben kann) erfolgt dann nach den entsprechenden geologischen/glaziologischen Gegebenheiten, um z.B. einen absturzgefährdeten Hang bzw. ein Teilstück hiervon zu überwachen: hat sich das gefährdete Teilstück über einen gewissen Grenzwert gegenüber einem (ortsfesten) Abschnitt bewegt, erfolgt über den Sensorkörper, der zwischen ortsfestem Abschnitt und gefährdetem Teilstück befestigt ist, eine entsprechende Signalausgabe.

Ein weiteres mögliches Anwendungsgebiet ist die Lawinenwarnung. Hierzu kann ein Sensorkörper der oben beschriebenen Ausführungsform(en) verwendet werden. Besonders vorteilhaft ist jedoch hierzu eine Abwandlungsform, welche wie folgt aufgebaut ist: der Sensorkörper besteht aus einem durchgehenden Schlauch, der in Abständen Einschnürungen aufweist, um die einzelnen, axial beabstandeten Segmente zu bilden. Die Tiefe der Einschnürungen ist hierbei derart, daß zwischen den einzelnen Segmenten ein bestimmtes, querschnittsmäßig jedoch eng dimensioniertes Lumen freibleibt. Der gesamte Schlauch oder Sensorkörper wird mit Wasser gefüllt, dem ein Elektrolyt beigemischt ist, um elektrische Leitfähigkeit über die gesamte Sensorkörperlänge zu erhalten. Der so gebildete Sensor oder Sensorkörper wird aufrechtstehend im Boden verankert, so daß der größte Teil seiner Längserstreckung nach oben oder außen vorragt. Im Sommer ist das sich im Schlauch befindliche Wasser flüssig und der Schlauch und damit Sensorkörper entsprechend flexibel oder geschmeidig, so daß er z.B. einwirkenden Windkräften elastisch ausweichen oder widerstehen kann. Wenn jedoch im Winter das Wasser im Schlauch gefriert, wird der Schlauch zu einem starren Sensorkörper. Schneeverfrachtungen oder -verschiebungen z.B. in Talrichtung wirken nun auf Druck und/oder Zug auf diesen starren Körper ein und bei Überschreiten eines Grenzwertes (bestimmt u.a. durch den Querschnitt des Lumens zwischen den einzelnen Segmenten, den Segmentabständen etc.) bricht der Schlauch (Sensorkörper) im Bereich zumindest einer Einschnürung: es kann kein elektrischer Strom mehr durch den Sensorkörper bzw. das Elektrolytwasser fließen und dieser Sachverhalt kann zu einer entsprechenden Signalausgabe und/oder -verarbeitung herangezogen werden. Kritische, d.h. lawinen-, muren-, steinschlagoder erdrutschgefährdete Hänge oder Gebiete können mit einer Vielzahl derartiger Sensorkörper "gespickt" werden, um eine möglichst lückenlose Überwachung zu gewährleisten, wobei die Aufwendungen z.B. im Vergleich zu Laserüberwachung wesentlich verringert sind.

Der erfindungsgemäße Sensorkörper bzw. die erfindungsgemäßen Sensorkörper können sowohl in Form eines zweidimensionalen Netzes (z.B. bei der Lawinenüberwachung etc.) oder auch in Form eines dreidimensionalen Netzes oder räumlichen Gitters (z.B. bei der Gebäudeüberwachung in erdbebengefährdeten Gebieten) angeordnet werden.

## Patentansprüche

1. Vorrichtung zur Überwachung von Relativbewegungen wenigstens zweier Bauteile (4, 6) zueinander, mit einem zwischen den Bauteilen (4, 6) angeordneten, an diesen insbesondere endseitig befestigten und die Relativbewegungen unter Verformung mitmachenden, langgestreckten Sensorkörper (14), der bei Überschreiten einer Verformungsgrenze ein Signal ausgibt, wobei ein signalauslösendes Element (24) entlang des Sensorkörpers verläuft, **dadurch gekennzeichnet**
**daß** der langgestreckte Sensorkörper (14) aus einer Mehrzahl von im wesentlichen koaxial hintereinander angeordneten Segmenten ( 20a, 20b, 20c,...) aufgebaut ist, wobei das signalauslösende Element (24) die einzelnen Segmente (20a, 20b, 20c,...) miteinander verbindet, und
**daß** die beiden Stirnflächen (22a, 22b, 22c,...) jeweils einander benachbarter Segmente (20a, 20b, 20c,...) im Abstand zueinander angeordnet sind.

2. Vorrichtung nach Anspruch 1, **dadurch gekennzeichnet, daß** das signalauslösendes Element (24) im wesentlichen mittig axial durch die einzelnen Segmente (20a, 20b, 20c,...) verläuft und diese miteinander verbindet.

3. Vorrichtung nach Anspruch 1 oder 2, **dadurch gekennzeichnet, daß** die Abstände (a) der Stirnflächen (22a, 22b, 22c,...) jeweils einander benachbarter Segmente (20a, 20b, 20c,...) über die gesamte Länge des Sensorkörpers (14) hinweg gesehen gleich sind.

4. Vorrichtung nach Anspruch 1 oder 2, **dadurch gekennzeichnet, daß** die Abstände (a) der Stirnflächen (22a, 22b, 22c,...) jeweils einander benachbarter Segmente (20a, 20b, 20c,...) sich über die gesamte Länge des Sensorkörpers (14) hinweg gesehen ändern.

5. Vorrichtung nach Anspruch 4, **dadurch gekennzeichnet, daß** die Abstände (a) der Stirnflächen (22a, 22b, 22c,...) jeweils einander benachbarter Segmente (20a, 20b, 20c,...) sich über die gesamte Länge des Sensorkörpers (14) hinweg gesehen stetig ändern.

6. Vorrichtung nach einem der Ansprüche 1 bis 5, **dadurch gekennzeichnet, daß** die Abstände (a) der Stirnflächen (22a, 22b, 22c,...) jeweils einander benachbarter Segmente (20a, 20b, 20c,...) werksseitig fest eingestellt sind.

7. Vorrichtung nach einem der Ansprüche 1 bis 6, **dadurch gekennzeichnet, daß** das signalauslösende Element (24) ein elektrischer Leiter ist.

8. Vorrichtung nach einem der Ansprüche 1 bis 7, **dadurch gekennzeichnet, daß** das signalauslösende Element (24) bei Überschreiten der Verformungsgrenze bricht oder reißt.

9. Vorrichtung nach einem der Ansprüche 1 bis 6, **dadurch gekennzeichnet, daß** das signalauslösende Element (24) ein Dehnungsmeßelement ist.

10. Vorrichtung nach einem der Ansprüche 1 bis 9, **dadurch gekennzeichnet, daß** die Segmente (20a, 20b, 20c,...) elektrisch isolierend sind.

11. Vorrichtung nach einem der Ansprüche 1 bis 10, **dadurch gekennzeichnet, daß** die Segmente (20a, 20b, 20c,...) jeweils mit einem Schutzüberzug versehen sind.

12. Vorrichtung nach einem der Ansprüche 1 bis 10, **dadurch gekennzeichnet, daß** die Segmente (20a, 20b, 20c,...) in einem sich über die gesamte Länge des Sensorkörpers (14) erstreckenden Schutzüberzug angeordnet sind.

13. Vorrichtung nach Anspruch 12, **dadurch gekennzeichnet, daß** der Schutzüberzug die Verformung des Sensorkörpers (14) im wesentlichen nicht behindert.

14. Vorrichtung nach einem oder mehreren der Ansprüche 1 bis 13, **gekennzeichnet durch** ihre Verwendung zur Lageüberwachung von Rollenwiegen (6) in Seilbahnen.

15. Seilbahn, insbesondere Ein-Seil-Umlaufbahn (EUB), **dadurch gekennzeichnet, daß** die Relativlagen der Rollenwiege (6) oder der Rollenwiegen (6) gegenüber einem Lager- oder Traggestell (4) durch eine Vorrichtung (2) nach einem oder mehreren der Ansprüche 1 bis 13 überwacht werden.

## Claims

1. Device for monitoring relative movements of two components (4,6) in relation to each other, existing of a long extended sensorbody which is mounted between these two components (4,6) especially on the ends of these two components (4,6) accompanies the relative movements by deformation and indicates exceeding deformation degrees by an indicating element (24) located along the sensorbody , wherein
- the long stretched sensor body (14) exists of several mainly coaxial one after the other situated segments(20a, 20b, 20c, ...) conducted one to the other by the indicating element (24) and
- both end faces (22a, 22b, 22c, ...) of neighbouring segments (20a, 20b, 20c, ...) are arranged keeping distance to one another.

2. Device for monitoring relative movements of two components in relation to each other as defined in claim 1 wherein,
- said indicating element (24) is located in the middle longiudinal axis of each segment ( 20a, 20b, 20c, ...) and connects one segment with the other.

3. Device for monitoring relative movements of two components in relation to each other as defined in claim 1or 2 wherein,
- said distances (a) between end faces (20a, 20b, 20c, ...) of neighbouring segments (20a, 20b, 20c, ...) are identical in width all over the length of the sensor body (14).

4. Device for monitoring relative movements of two components in relation to each other as defined in claim 1or 2 wherein,
- said distances (a) between end faces (22a, 22b, 22c, ...) of neighbouring segments (20a, 20b, 20c, ...) are of different width all over the length of the sensor body (14).

5. Device for monitoring relative movements of two components in relation to each other as defined in claim 4 wherein,
- said distances (a) between end faces (22a, 22b, 22c, ...) are of continuously increasing or decreasing width all over the length of the sensor body (14).

6. Device for monitoring relative movements of two components in relation to each other as defined in claims 1 to 5 wherein,
- said distances (a) between end faces (22a, 22b, 22c, ...) of neighbouring segments (20a, 20b, 20c, ...) are adjusted by factory to defined width.

7. Device for monitoring relative movements of two components in relation to each other as defined in claims 1 to 6 wherein,
- said indicating element (24) is made of electrically conducting material.

8. Device for monitoring relative movements of two components in relation to each other as defined in one of the claims 1 to 7 wherein,
- said indicating element (24) breaks when being stretched and exceeding its moulding limit.

9. Device for monitoring relative movements of two components in relation to each other as defined in claims 1 to 6 wherein,
- said indicating element is an extension measuring element.

10. Device for monitoring relative movements of two components in relation to each other as defined in claims 1 to 9 wherein,
- the segments (20a, 20b, 20c, ...) are made of electrically isolating material.

11. Device for monitoring relative movements of two components in relation to each other as defined in claims 1 to 10 wherein,
- the segments (20a, 20b, 20c, ...) are protected by a cover

12. Device for monitoring relative movements of two components in relation to each other as defined in claims 1 to 10 wherein,
- the segments (20a, 20b, 20c, ...) are mounted within a protecting cover all over the length of the sensor body.

13. Device for monitoring relative movements of two components in relation to each other as defined in claim 12 wherein,
- the protecting cover does not hinder the deformation of the sensor body.

14. Device for monitoring relative movements of two components in relation to each other as defined in one or several of the claims 1 to 113 wherein,
- it is used for monitoring the position of pulley assemblies (6) in ropeways.

15. Ropeway with a device as defined in one or several claims 1 to 13 that monitors the position of its pulley assembly (6) or pulley assemblies (6) relative to its bearing or supporting rack.

## Revendications

1. Dispositif pour surveiller des mouvements relatifs d'au moins deux éléments (4, 6) l'un vers l'autre avec un corps détecteur allongé qui est attaché entre les deux éléments (4, 6) surtout aux bouts de ceux-ci, qui s'adapte aux mouvements relatifs en se déformant et qui donne un signal quand une limite de déformation est dépassée de manière qu'un élément (24) déclenchant le signal se trouve le long du corps détecteur **caractérisé par le fait**
- **que** le corps détecteur (14) consiste de plusieurs segments (20a, 20b, 20c,... ) situés surtout de manière coaxiale l'un derrière l'autre avec l'élément déclenchant le signal (24) reliant les segments individuels (20a, 20b, 20c,... ) et
- **que** les fronts de deux segments voisins (20a, 20b, 20c,...)sont arrangés avec une certaine distance les uns des autres.

2. Dispositif d'après le dépôt 1, **caractérisé par le fait que** l'élément déclenchant le signal (24) se trouve surtout sur une axe centrale longitudinal à travers des segments individuels (20a, 20b, 20c,... ) reliant ceux-ci l'un à l'autre.

3. Dispositif d'après le dépôt 1 ou 2, **caractérisé par le fait que** les distances (a) entre des fronts (22a, 22b, 22c,... ) de deux segments voisins (22a, 22b, 22c,...) sont identiques tout au long du corps détecteur (14).

4. Dispositif d'après le dépôt 1 ou 2, **caractérisé par le fait que** les distances (a) entre des fronts (22a, 22b, 22c,...) de deux segments voisins (22a, 22b, 22c,...) varient tout au long du corps détecteur (14).

5. Dispositif d'après le dépôt 4, **caractérisé par le fait que** les distances (a) entre des fronts (22a, 22b, 22c,...) de deux segments voisins (22a, 22b, 22c,... ) varient de manière permanente tout au long du corps détecteur (14).

6. Dispositif d'après un des dépôts 1 à 5, **caractérisé par le fait que** les distances (a) entre des fronts (22a, 22b, 22c,... ) de deux segments voisins (22a, 22b, 22c,...) sont réglées ferme de la part de l'usine.

7. Dispositif d'après un des dépôts 1 à 6, **caractérisé par le fait que** l'élément déclenchant le signal (24) est un conducteur électrique.

8. Dispositif d'après un des dépôts 1 à 7, **caractérisé par le fait que** l'élément déclenchant le signal (24) se casse ou se déchire quand la limite de déformation est dépassée.

9. Dispositif d'après un des dépôts 1 à 6, **caractérisé par le fait que** l'élément déclenchant le signal (24) est un élément mesurant l'extension.

10. Dispositif d'après un des dépôts 1 à 9, **caractérisé par le fait que** les segments (20a, 20b, 20c,... ) sont faits de matière électriquement isolante.

11. Dispositif d'après un des dépôts 1 à 10, **caractérisé par le fait que** les segments (20a, 20b, 20c,... ) sont munis d'une couche protectrice.

12. Dispositif d'après un des dépôts 1 à 10, **caractérisé par le fait que** les segments (20a, 20b, 20c,... ) sont arrangés dans une couche protectrice qui s'étend tout le long du corps détecteur (24).

13. Dispositif d'après le dépôt 12, **caractérisé par le fait que** la couche protectrice ne gêne pas essentiellement la déformation du corps détecteur (14).

14. Dispositif d'après un ou plusieurs des dépôts 1 à 13, **caractérisé par le fait que** ces derniers sont utilisés pour surveiller des assemblages de poulies (6) dans des téléfériques.

15. Une téléférique, surtout celle avec un seul câble circulant, **caractérisée par le fait que** les positions relatives d'assemblages de poulies (6) ou des assemblages de poulies (6) vis-à-vis d'une construction de roulement ou de support (4) sont surveillés par un dispositif d'après un des dépôts 1 à 13.
